Europäisches Patentamt

(19) European Patent Office

Office européen des brevets

(11) Publication number: **0 281 723 B1**

# EUROPEAN PATENT SPECIFICATION

(45) Date of publication of patent specification:
02.01.91 Bulletin 91/01

(51) Int. Cl.⁵: **F16C 29/04**, F16D 3/06,
F16C 3/035

(21) Application number: **87850391.1**

(22) Date of filing: **17.12.87**

(54) Overload-protected torque transmitting telescopic shaft.

(30) Priority: **12.03.87 SE 8701041**

(43) Date of publication of application:
**14.09.88 Bulletin 88/37**

(45) Publication of the grant of the patent:
**02.01.91 Bulletin 91/01**

(84) Designated Contracting States:
**AT BE CH DE ES FR GB IT LI NL SE**

(56) References cited:
**DE-A- 3 124 927
FR-A- 2 149 144
GB-A- 2 136 928
US-A- 2 952 145
US-A- 3 449 927**

(73) Proprietor: **FFV Autotech Aktiebolag
Box 583
S-631 08 Eskilstuna (SE)**

(72) Inventor: **Hakansson, Olle
Södra Knoopsgatan 12
S-632 26 Eskilstuna (SE)**

(74) Representative: **Avellan-Hultman, Olle et al
Avellan-Hultman Patentbyra AB P.O. Box 5366
S-102 46 Stockholm 5 (SE)**

## Description

The present invention generally relates to a torque transmitting telescopically operating apparatus, in particular an apparatus comprising a shaft and a sleeve which are displacable in relation to each other and which are rotatably interconnected so as to enable a torque transmittance therebetween. The invention has especially been developped as the solution of the problem, connected to steering wheel columns for motor cars, of

- providing as low friction as possible during axial displacement of the shaft in relation to the sleeve,

- providing as play-free torque transmittance between the shaft and the sleeve as possible,

- and at the same time eliminating the risk of overload of the machine elements included in the telescopic apparatus.

Telescopically operating guides can be formed for a direct slide friction, like for instance, as a special case, "the spline connection", or with friction reducing means between the shaft and the sleeve, in particular with slide bearings or roller bearings.

Telescopic guides operating solely with a slide friction have a relatively great axial friction, especially if the guide parts are formed with narrow tolerances in order to reduce the play during the torque transmittance, or vice versa relatively great plays during the torque transmittance in case it is intended to provide a relatively little axial friction. Irrespectively how the guide parts are formed a play arises after some time of wear. The known apparatus also are subjected to a substantial wear and they generally give a stiff and rough torque transmittance contact and problems connected therewith.

Several types of telescopic guides having friction reducing means are based either on the the slide principle or on the rolling principle.

Telescopic joints of the slide friction type are often formed with slide bearings which are placed between the shaft and the sleeeve and which are fixed connected to the shaft or to the sleeve. The slide bearings become worn by time, and as a consequence plays appear in the joint. The joints also are so stiff that the joint parts may be damaged if temporarily overloaded in the radial direction.

Telescopic joints of the rolling type, in turn, are generally formed with balls or rollers which are placed between the shaft and sleeve parts that are displacable in relation to each other.

The United States patent N° US-A-3449927 relates to shaft couplings which accomodate relative axial movement of coupled shafts, while transmitting torque between them. A recirculating ball coupling comprises an inner member axially displaceable and non-rotatable within a tubular outer member which has a plurality of longitudinally extending grooves on its inner surface and ball retaining members which are respectively contrally located one in each groove so as to define two laterally spaced and longitudinally extending ball passages. In use rolling motion of the balls accomodates relative axial movement of the coupled shafts, the torque being transmitted by the balls in one passage of each groove with the balls in the other passage unloaded so that the balls recirculate.

In said priorly known roller friction apparatus the balls themselves transmit the entire torque and therefore there is a risk that both the balls and the ball paths are damaged in case of an overload. Such damages cause an increased friction and increased pressures etc. upon axial mutual displacement of the parts and an increased play during the torque transmittance.

The object of the invention therefore is to solve the problem of providing a telescopic guide having the ability of transmitting torque, in which there is an optimum low resistance upon telescopation of the parts, an optimum little play during the torque transmittance, an eliminated risk of damages depending on overload and an optimum little wear during long time use.

According to the invention this object is fulfilled in that the sleeve and/or the shaft, at each pair of cooperating sides of a sleeve and shaft device having a polygonal cross section shape, are/is formed with at least three portions, namely a central portion or groove, against or in which rollers or balls are in rolling contact for transmitting torques of normal forces between the shaft and the sleeve, and at least one outer portion on each side of said central groove portion adapted to receive overstrong loads between the shaft and the sleeve by providing a direct contact between said shaft and sleeve.

The rollers or balls preferably are spring biassed in order to reduce the play upon the torque transmittance of normal forces and for reducing the wear and the risk of damages of the cooperating shaft and sleeve surfaces. The rollers or balls may for the purpose be mounted in roller or ball carriers which are slidable in relation to a rolling path or bed in the form of a spring plate or a contact surface which is spring biassed in any other way.

Further characteristics of the invention and advantages thereof will be evident from the following detailed specification in which reference will be made to the accompanying drawings.

It is, however, to be understood that the illustrated and described embodiments of the invention are only illustrating examples and that many different variations may be presented within the scope of the appended claims.

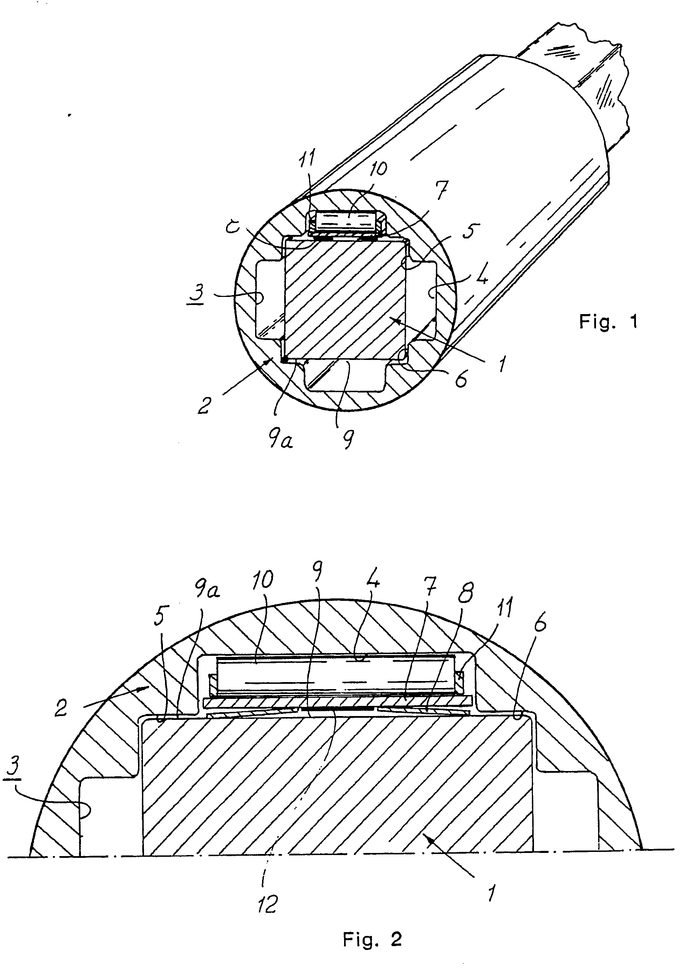

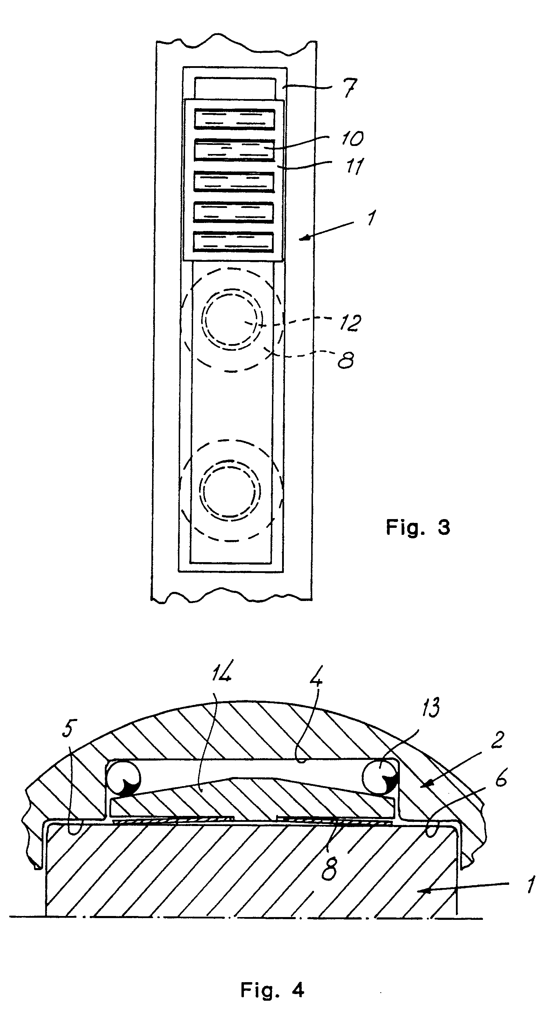

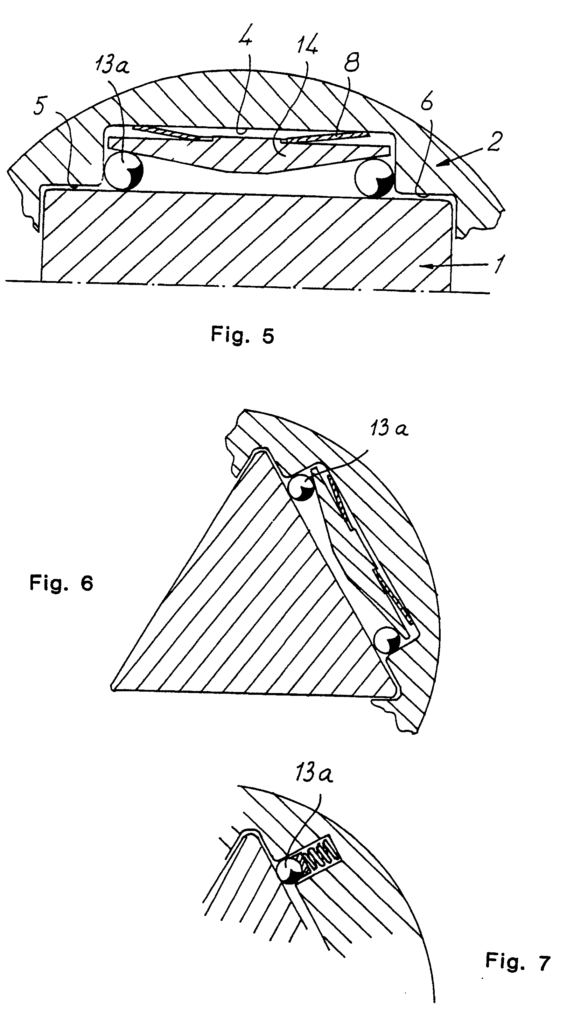

In the drawings figure 1 shows a cross section through a telescopic guide according to the invention having a substantially square shaft and correspondingly shaped guide grooves of the sleeve. Figure 2 shows a detail of the apparatus of figure 1 in an enlarged scale. Figure 3 shows details of the apparatus of figure 1 in a plan view. Figures 4 and 5 show, in the same way as in figure 2, alternative embodiments of the invention, and figures 6 and 7 diagrammatically show further modified embodiments of the invention.

The apparatus shown in figures 1 and 2 generally comprises a shaft 1 having a substantially square cross section and a sleeve 2 having a through bore 3 matching said shaft 1. The bore 3 of the sleeve provides, for each surface of the shaft 1, a central radially outwards facing groove 4 adapted to accommodate a rolling means between the shaft and the sleeve. For the sake of clearness such rolling means is shown only in one of the grooves 4. On each side of the central groove 4 each cooperative surface of the sleeve provides a carrier surface 5 and 6 resp. adapted to get into direct contact with the outermost surface parts of the shaft 1 in case of an over-strong load of the telescopic guide.

As best shown in figure 2 each rolling means is in the form of a rolling bed 7, which over plate springs 8 or any other known spring means is in contact with the guide surface 9 of the shaft, and on which several rollers 10 are adapted to roll in contact with the guide surface of the groove 4. As usual the rollers 10 are maintained in a given order by means of a roller carrier 11.

Any axial displacement of the shaft 1 in relation to the sleeve 2 is made under a rolling contact giving an utterly little friction, and upon a rotation of the unit comprising the shaft and the sleeve for the purpose of transmitting torques the rollers 10 cooperating with the rolling bed 7 and its springs 8 will foresee that any play is eliminated. The same thing happens upon rotation and simultaneous telescopating of the shaft and sleeve.

The springs are calculated considering the normal torque to be transmitted and so that any contact between the shaft and the sleeve is made over the rollers 10. In case of an overstrong rotation of the shaft in relation to the sleeve, or vice versa, the springs are compressed and the shaft thereby comes into contact with the carrier surfaces 5 and 6 of the sleeve with the edge parts 9a of their surfaces 9. Depending on said contact the groove 4 and the rollers 10 are protected against damages depending on overload.

Figure 3 separately shows a rolling means having a rolling bed 7, plate springs 8, rollers 10 and a roller carrier 11. The plate springs 8 can be maintained correctly positioned by means of diagrammatically indicated pins 12 provided on suitable distances from each other at the bottom surface of the rolling bed 7.

It is obvious that it is possible to provide several separate roller grooves and eventually several carrier surfaces parallelly with each other, and that the groove for the rollers 10 or the balls can be provided in the sleeve, as shown in figures 1 and 2, or alternatively in the shaft, or in both, or that the shaft and the sleeve may have cooperating groove portions.

Figure 4 shows an alternative embodiment of the telescopic guide according to the invention in which the rolling means comprises balls instead of rolls. The balls 13 are mounted in a ball carrier (not shown) and each ball is, by a radially outwards biassed conical ball path or bed 14, biassed into contact with the groove 4 at two points, that is a point at the inner surface and a point at the side surface of the groove 4. The function is the same as in the apparatus according to figures 1-3.

Figure 5 shows a modified embodiment of the telescopic guide which differs from the guide of figure 4 in that the guide balls 13a are facing inwardly to the shaft 1 instead of outwardly to the sleeve groove 4.

Figure 6 diagrammatically shows an embodiment of the telescopic guide which is of the same basic structure as the previously described guides, but in which the shaft and the sleeve respectively has a triangular cross section form. It is obvious that said cross section form can be varied within wide ranges and to any polygonal cross section form.

Figure 7 indicates a possibility of using a large number of separate rolling means in the form of balls each provided in a guide bore and each having a spring and a ball carrier.

## Claims

1. Torque transmitting telescopic apparatus, in particular comprising a shaft (1) and a sleeve (2) which are rotatable and which are connected axially displacable in relation to each other for making a torque transmittance possible, **characterized** in that the sleeve (2) and/or the shaft (1) at each pair of cooperating sides of a sleeve and a shaft having a polygonal cross section shape are/is formed with at least three portions, namely a central portion or a groove (4) which is narrower than the matching cooperating surface of the other element and against or in which rollers (10) or balls (13) are operating for transmitting normal torque forces between the shaft (1) and the sleeve (2), and on each side of said central groove portion(4)a carrier surface (5, 6) adapted to receive overstrong torques between the shaft (1) and the sleeve (2).

2. Apparatus according to claim 1, **characterized** in that the rollers (10) or balls (13) are mounted over spring biassing means between cooperating guide surfaces (4, 9) of the sleeve (2) and the shaft (1).

3. Apparatus according to claim 1 or 2, **characterized** in that the rollers (10) or balls (13) roll on a rolling bed (7) which is axially non-movably mounted in relation to the shaft (1) or to the sleeve (2).

4. Apparatus according to claim 3, **characterized** in that the rolling bed (7) is mounted on the shaft (1) or the sleeve (2) over one or several biassing means (8) of a pre-calculated spring force, so that the rollers (10) or balls (13) in case of normal torque forces receive any torque, whereas the rollers (10) or balls (13) in case of overstrong torque forces are depending on a direct contact between parts of the shaft surface and the bore (3) of the sleeve (2).

5. Apparatus according to claim 3, **characterized** in that the biassing means are plate springs (8) which are fixedly mounted on suitable distances from each other under the rolling bed (7).

6. Apparatus according to any of the preceding claims, **characterized** in that it comprises several torque transmitting guide surfaces (4, 9) for the rollers (10) or balls (13) provided parallelly to each other.

7. Apparatus according to any of claims 3-5 having balls (13) as rolling elements, **characterized** in that the rolling bed (7) has an elongated path (14) of conical ridge type, in which the conical surfaces act as force transmitting surfaces for pressing, for each pair of cooperating surfaces of the sleeve (2) and the shaft (1), two different sets of balls both radially outwards and sideways apart.

8. Apparatus according to claim 7, **characterized** in that the conical elongated path (14) is mounted spring biassed against the shaft (1) for biassing the balls (13) radially outwards and to the sides of the central groove portion (4).

9. Apparatus according to claim 7, **characterized** in that the elongated path (14) is mounted spring biassed against the bottom of the central groove portion (4) for biassing the balls (13a) radially inwards into contact with the guide surface (9) of the shaft (1) and to the sides of the central groove portion (4).

10. Apparatus according to any of the preceding claims, **characterized** in that the central groove portion (4) is formed in the sleeve (2) or in the shaft (1) or in both.

**Ansprüche**

1. Drehmomentübertragende Teleskopvorrichtung, insbesondere mit einer Welle (1) und einer Hülse (2), die drehbar sind und axial relativ zueinander verschiebbar verbunden sind, um eine Drehmomentübertragung zu ermöglichen, dadurch gekennzeichnet, daß die Hülse (2) und/oder die Welle (1) an jedem Paar kooperierender Seiten einer Hülse und einer Welle von polygonalem Querschnitt mit mindestens drei Abschnitten versehen ist/sind, nämlich mit einem zentralen Abschnitt oder einer Nut (4), die schmaler ist als die passende kooperierende Fläche des anderen Elements und gegen die bzw. in der Rollen (10) oder Kugeln (13) arbeiten, um normale Drehkräfte zwischen der Welle (1) und der Hülse (2) zu übertragen, und mit einer Trägerfläche (5, 6) zu jeder Seite des zentralen Nutabschnitts (4) zur Aufnahme von Überlast-Drehmomenten zwischen der Welle (1) und der Hülse (2).

2. Vorrichtung nach Anspruch 1, dadurch gekennzeichnet, daß die Rollen (10) oder Kugeln (13) auf Federverspannungsmitteln zwischen kooperierenden Führungsflächen (4, 9) der Hülse (2) und der Welle 1 montiert sind.

3. Vorrichtung nach Anspruch 1 oder 2, dadurch gekennzeichnet, daß die Rollen (10) oder Kugeln (13) auf einem Wälzbett (7) abrollen, welches relativ zu der Welle (1) oder der Hülse (2) axial bewegungsfest montiert ist.

4. Vorrichtung nach Anspruch 3, dadurch gekennzeichnet, daß das Wälzbett (7) an der Welle (1) oder Hülse (2) auf einem oder mehreren Verspannungsmitteln (8) vorausberechneter Federkraft montiert ist, so daß die Rollen (10) oder Kugeln (13) im Falle normaler Drehkräfte jegliches Drehmoment aufnehmen, während die Rollen (10) oder Kugeln (13) im Falle von Überlast-Drehkräften einen direkten Kontakt zwischen Teilen der Wellenfläche und der Bohrung (3) der Hülse (2) zulassen.

5. Vorrichtung nach Anspruch 3, dadurch gekennzeichnet, daß die Verspannungsmittel als Plattenfedern (8) ausgebildet sind, die in geeignetem Abstand voneinander unterhalb des Wälzbettes (7) fest montiert sind.

6. Vorrichtung nach einem der vorhergehenden Ansprüche, gekennzeichnet durch mehrere drehmomentübertragende Führungsflächen (4, 9) für die Rollen (10) oder Kugeln (13), die parallel zueinander vorgesehen sind.

7. Vorrichtung nach einem der Ansprüche 3 bis 5 mit Kugeln (13) als Wälzelemente, dadurch gekennzeichnet, daß das Wälzbett (7) eine langgestreckte Bahn (14) von konischer Dachform aufweist, bei der die konischen Flächen als kraftübertragende Flächen wirken, um pro Paar kooperierender Flächen der Hülse (2) und der Welle (1) zwei gesonderte Kugelsätze sowohl radial auswärts als auch seitwärts auseinander zu drücken.

8. Vorrichtung nach Anspruch 7, dadurch gekennzeichnet, daß die konische langgestreckte Bahn (14) gegen die Wellen (1) federverspannt montiert ist, um die Kugeln (13) radial auswärts und gegen die Seiten des zentralen Nutabschnitts (4) zu verspannen.

9. Vorrichtung nach Anspruch 7, dadurch gekennzeichnet, daß die langgestreckte Bahn (14) gegen den Boden des zentralen Nutabschnitts (4) federverspannt montiert ist, um die Kugeln (13a) radial einwärts in Berührung mit der Führungsfläche (9) der Welle (1) und gegen die Seiten des zentralen Nutabschnitts (4) zu verspannen.

10. Vorrichtung nach einem der vorhergehenden Ansprüche, dadurch gekennzeichnet, daß der zentrale Nutabschnitt (4) in der Hülse (2) oder in der Welle (1) oder in beiden ausgebildet ist.

## Revendications

1. Dispositif télescopique de transmission d'un couple, en particulier comportant un arbre (1) et un fourreau (2) qui peuvent être entraînés en rotation et qui sont connectés avec liberté de se déplacer axialement l'un par rapport à l'autre pour rendre possible la transmission d'un couple, caractérisé par le fait que le fourreau (2) et/ou l'arbre (1), à chaque paire de faces coopérantes d'un fourreau et d'un manchon de section droite polygonale, sont/est formé(s) d'au moins trois portions, à savoir une portion centrale ou rainure (4) qui est plus étroite que la surface coopérante correspondante de l'autre élément et contre, ou dans laquelle des rouleaux (10) ou des billes (13) opèrent pour transmettre des forces de couple normales entre l'arbre (1) et le fourreau (2), et, de chaque côté de ladite portion de rainure centrale (4), une surface porteuse (5, 6) conçue pour recevoir les couples en surcharge entre l'arbre (1) et le fourreau (2).

2. Dispositif selon la revendication 1, caractérisé par le fait que les rouleaux (10) ou les billes (13) sont montés sur des moyens contraints par des ressorts, entre les surfaces de guidage coopérantes (4, 9) du fourreau (2) et de l'arbre 1 .

3. Dispositif selon la revendication 1 ou 2, caractérisé par le fait que les rouleaux (10) ou les billes (13) roulent sur une piste de roulement (7) qui est montée sans liberté de déplacement axial par rapport à l'arbre (1) ou par rapport au fourreau (2).

4. Dispositif selon la revendication 3, caractérisé par le fait que la piste de roulement (7) est montée sur l'arbre (1) ou sur le fourreau (2) par l'intermédiaire d'un ou plusieurs moyens de contrainte (8) d'une force élastique précalculée, de façon que, dans le cas de forces de couple normales, ce soient les rouleaux (10) ou les billes (13) qui reprennent le couple, tandis que, en cas de forces de couple en surcharge, les rouleaux (10) ou les billes (13) puissent compter sur un contact direct entre des parties de la surface de l'arbre et l'alésage (3) du fourreau (2).

5. Dispositif selon la revendication 3, caractérisé par le fait que les moyens de contrainte sont des plaquettes élastiques (8) qui sont montées fixes, à distance convenable l'une de l'autre, sous la piste de roulement 7 .

6. Dispositif selon l'une quelconque des revendications précédentes, caractérisé par le fait qu'il comporte, pour les rouleaux (10) ou pour les billes (13), plusieurs surfaces de guidage (4, 9) de transmission du couple, prévues parallèlement l'une à l'autre.

7. Dispositif selon l'une quelconque des revendications 3 à 5 présentant des billes (13) comme éléments de roulement, caractérisé par le fait que la piste de roulement (7) présente un chemin allongé (14) une arête conique, dans laquelle les surfaces coniques agissent en tant que surfaces de transmission de la force pour presser, pour chaque paire de surfaces coopérantes du fourreau (2) et de l'arbre (1), deux jeux différents de billes, à la fois radialement vers l'extérieur et vers les côtés, à part l'un de l'autre.

8. Dispositif selon la revendication 7, caractérisé par le fait que le chemin conique allongé (14) est monté, contraint élastiquement, contre l'arbre (1) pour contraindre les billes (13) radialement vers l'extérieur et vers les côtés de la portion de rainure centrale (4).

9. Dispositif selon la revendication 7, caractérisé par le fait que le chemin allongé (14) est monté, contraint élastiquement, contre le fond de la portion de rainure centrale (4) pour contraindre les billes (13a) radialement vers l'intérieur, pour les faire venir en contact avec la surface de guidage (9) de l'arbre (1), et vers les côtés de la portion de rainure centrale (4).

10. Dispositif selon l'une quelconque des revendications précédentes, caractérisé par le fait que la portion de rainure centrale (4) est formée sur le fourreau (2) ou sur l'arbre (1), ou sur les deux.

Fig. 1

Fig. 2

Fig. 3

Fig. 4

Fig. 5

Fig. 6

Fig. 7